# EUROPEAN PATENT SPECIFICATION

(11) **EP 0 623 235 B1**
(45) Date of publication and mention of the grant of the patent: **04.06.1997**
(21) Application number: 93902268.7
(22) Date of filing: 15.01.1993
(51) Int. Cl.: G07G 1/12, B42D 15/10, G07F 7/08

(54) **A METHOD FOR MAKING AND COLLECTING DONATIONS**
VERFAHREN ZUM EINZAHLEN UND EINSAMMELN VON SPENDEN
PROCEDE POUR VERSER ET POUR COLLECTER DES FONDS

(30) Priority: 15.01.1992 FI 920050 U; 07.05.1992 FI 920342 U
(43) Date of publication of application: 09.11.1994
(73) Proprietor: OY PACTA CREATIVE SERVICES INC., 00380 Helsinki (FI)
(72) Inventor: REINIKAINEN, Pekka, SF-00640 Helsinki (FI)
(74) Representative: Cross, Rupert Edward Blount
(86) International application number: FI9300013
(87) International publication number: WO9314476

(56) References cited:
- WO-A-86/02757
- DE-C- 4 000 133
- GB-A- 1 597 201
- US-A- 4 926 325

## Description

### FIELD OF THE INVENTION

This invention relates in general to charitable donations. More particularly, it relates to a novel system for making and collecting charitable donations.

### BACKGROUND OF THE INVENTION

Fund-raising organizations typically solicit and collect charitable donations using conventional advertising and money-transfer techniques. For example, an organization may send a mass mailing or print a newspaper advertisement requesting donations. The donations, which are usually in the form of a check or money-order, are typically mailed to a post office box or address. The donations are then cashed or deposited through a financial institution.

Another popular method of raising funds is to purchase television time and run advertisements or sponsored program. The viewers are asked to call in and make a donation. The donations are typically made by credit card over the phone, or by mailing a check or money order to a post office box or address.

Although popular, these fund-raising methods are expensive and can require a great deal of labor and planning to implement. Also, the expense involved in such fund raising methods prohibits smaller fund-raising organizations from using them.

Retail outlets and other businesses have allowed fund-raising organizations to place collection boxes or fund-collection lists in their stores in order to allow customers to make charitable donations. The effectiveness of such "box-and-list" methods has been limited, primarily because the collection process has not been sufficiently integrated with the normal financial transactions made by customers.

Outside the charitable field, coded coupons are known for use in merchandising. One example of a coupon which has a monetary value when exchanged for specific goods is described in GB-A-1,597,201.

The following terms may be used throughout this disclosure and are to be given their intended meaning as understood in the art, including but not necessarily limited to the following general definitions.

The terms "article" or "item" refer to a product or other merchandise that can be marked with a bar code and identified by a computer-based cash register machine.

The terms "bar code" or "bar code symbol" refer to a representation of an article number in a form suitable for scanning and/or reading by computer-based machines.

The term "encode" refers to placing data and/or information into the form of a code.

The term "EAN" stands for International Article Number (previously referred to as European Article Number) which is the uniform standard for item coding in the world, excluding the United States and Canada.

The term "UPC" stands for Uniform Product Code, which is the uniform standard for item coding in the United States and Canada.

The term "article number" refers in general to the number code represented in the EAN and UPC codes.

The term "PLU" stands for price-look-up, which generally refers to the retrieval of a price from a computer file, rather than retrieval of the price from a keyboard entry.

The term "POS" stands for point-of-sale, which generally refers to the point at which goods are purchased either in a retail outlet.

The term "EPOS" stands for electronic-point-of-sale, which generally refers to all electronic equipment used at the point of sale, including scanning equipment, electronic scales, credit card readers, and the like.

The term "ECR" stands for electronic-cash-registers, which are cash registers having no scanning system and limited processing capacity.

The terms "laser scanner" refer to an electronic bar code reading device that uses a low power laser as its light source.

The terms "light pen" refer to a hand held bar code reading device that must be passed across the symbols of a bar code in order to read it.

The terms "machine readable" refer to any code or other graphical representation capable of being read by scanning devices.

The term "scanning" refers to reading a code by a machine.

The term "wand" refers to a light pen used to scan codes.

The terms "boot" or "booting" refer to the operation of clearing used information from the working memory of a computer-based device. This is typically done before a new set of instructions is executed.

### SUMMARY OF THE INVENTION

Accordingly, it is an object of the present invention to provide an improved system for making and collecting charitable donations.

It is another object of the present invention to provide a simple, low-cost, reliable and efficient system for making and collecting charitable donations.

It is another object of the present invention to provide a system for making charitable donations in which the ability to reach potential donors is greatly increased.

It is another object of the present invention to provide a system for making charitable donations in which the potential for theft, fraud, or mishandling of funds is limited, thus improving the overall integrity and trustworthiness perceived by donors.

These and other objects and advantages are realized in accordance with a first aspect of the present invention by providing a method of collecting donations, the steps comprising: providing a donor with encoded data identifying at least one entity;
providing a computer having data entry means, said computer being programmed to perform the following functions:
accept at said data entry means said encoded data identifying said at least one entity;
accept at said data entry means a currency amount of a charitable donation from said donor to said at least one entity; and
associate said currency amount with said encoded data identifying said at least one entity.

According to a second aspect of the present invention there is provided a donation collecting means, comprising a printed card of plastic material, paper board, carton or similar printable sheet material, said card being provided with printed information concerning at least the purpose of the donation and the entity receiving the donation; and said card being further provided with coded information, for example in the form of a bar code, automatically readable and processable by code-detecting means and a computer-based cash register of the type used in retail stores and similar business establishments.

In a preferred embodiment the encoded data may also include a variety of additional information, such as the amount of the donation or the establishment that distributed the article. Likewise, the printed information may include graphical representations, photographs, or a narrative describing the details of a particular program to which the donation would be applied.

The disclosed donation cards may be widely distributed to potential donors by a variety of conventional means such as newspapers or mail. They may also be distributed at stores, financial institutions, public buildings, and other establishments. The donor presents the card to a computer-based cash register or automatic teller machine. In one embodiment the computer includes the following features: means for entering data; means for storing data that notifies the computer that the presented article is a donation card; means for storing data identifying a beneficiary; means for storing a currency amount of a donation to a beneficiary; means for associating entered currency amounts with entered data identifying a presented item as a donation card; means for associating entered currency amounts with entered data identifying a beneficiary; and means for collecting the currency amount from the donor.

The enocoded data on the card is entered into the computer at the data entry means. The encoded data notifies the computer that the presented article is a donation card and that a charitable donation is about to be made to the entity identified on the card. The currency amount of the donation is also entered at the data entry means. The computer associates the entered currency amount with the entered data identifying the donation card and the entity for receiving the charitable donation, and the specified currency amount is collected from the donor.

Thus, the present invention achieves several advantages. The above-described cards can be easily integrated into the regular product-line of any retail establishment that uses computer-based cash-registers/terminals to identify products and collect funds for purchases. Thus, fund-raising activities may be easily integrated with the normal cash-collecting and accounting systems utilized in retail trades. By making use of the disclosed system, fund-raising entities can organize their fund-raising activities through large retail outlets, thus receiving exposure to a large pool of potential donors on a regular basis. The need for providing labor dedicated to collecting funds is reduced and in some cases may be eliminated.

### BRIEF DESCRIPTION OF THE DRAWINGS

Figure 1 is a flow diagram of a presently preferred system embodying the present invention;
Figure 2 is a block diagram of the hardware and/or software components that may be used in connection with the system shown in Figure 1;
Figure 3a is an encoded donation card for use in connection with the system shown in Figure 1;
Figure 3b illustrates the EAN-13 standard bar code used in connection with the donation card illustrated in Figure 3a;
Figure 3c illustrates the UPC-A standard bar code used in connection with the donation card illustrated in Figure 3a; and
Figures 4a to 4e are flow diagrams illustrating a the general operation of the computer hardware and software used to implement the system shown in Figure 1.

### DETAILED DESCRIPTION OF THE PRESENTLY PREFERRED EMBODIMENTS

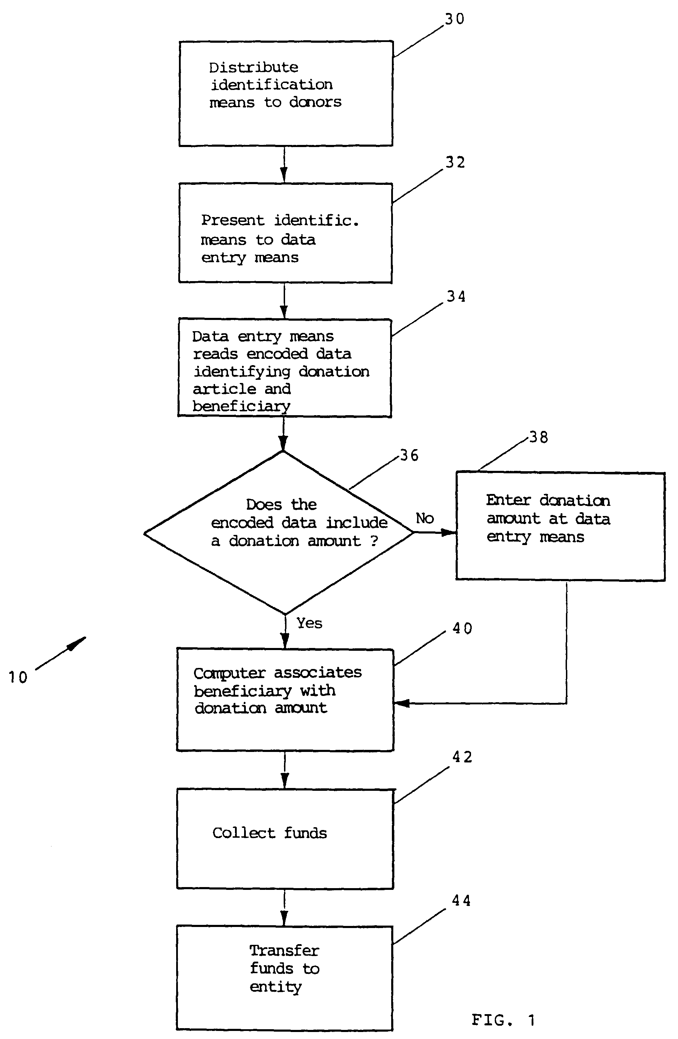

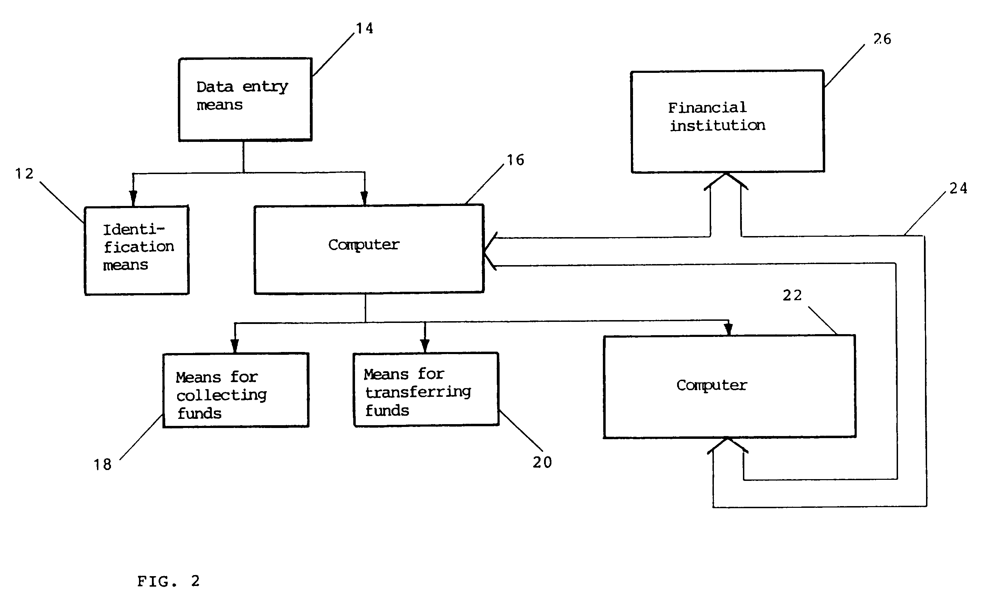

Figure 1 is a block diagram illustrating a presently preferred embodiment of a system 10 for making and collecting donations. Figure 2 is a block diagram of the hardware and/or software components that may be used in connection with the system shown in Figure 1.

The components illustrated in Figure 2 include identification means 12, data entry means 14 in communication with a first computer 16, means for collecting funds 18 in communication with the first computer 16, means for transferring funds 20 in communication with the first computer 16, and a second computer 22 in communication with the first computer 16. The second computer 22 may also communicate with the means for collecting funds 18 and the means for transferring funds 20. A bi-directional data bus line 24 may be provided to connect the first and second computers 16, 22 to the computer system of a financial institution 26.

The system 10 illustrated in Figure 1 begins in block 30 by distributing identification means 12 to potential donors. The identification means 12 has encoded data thereon identifying the identification means 12 and at least one beneficiary. When the donor is ready to make a charitable donation to the beneficiary identified on the identification means 12, the identification means 12 is presented to the data entry means 14 in block 32. The data entry means 14 reads the encoded data on the identification means 12 in block 34.

The encoded data on the identification means 12 may include one or more predetermined currency amounts of the donation. The system 10 determines in block 36 whether or not a currency amount is included in the encoded data. If the currency amount is not included in the encoded data, the currency amount is entered separately at the data entry means 14 in block 38, and the system 10 returns to block 40. If the currency amount is included in the encoded information, the system 10 moves directly to block 40 from block 36. In block 40, the system 10 associates the entered currency amount with the data identifying the identification means 12 and the beneficiary. In block 42, the funds are collected from the donor, and in block 44 the collected funds are transferred to the beneficiary.

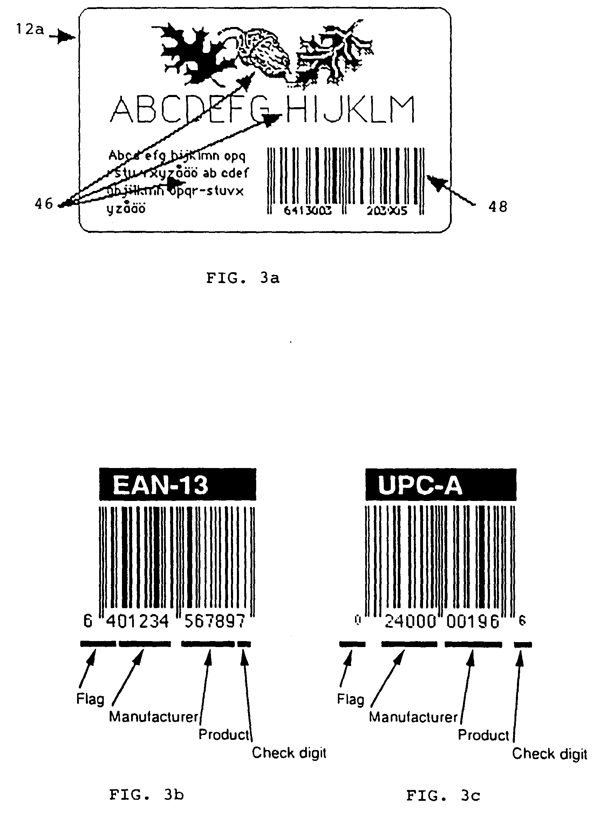

The identification means 12 may be a donation card made from plastic, paper, cardboard, or other materials. An example of a card 12a embodying the identification means 12 is illustrated in Figure 3a. The card 12a may also be provided as part of another printed product such as a newspaper, a periodical, an advertisement, a direct mail item, a direct distribution material, a prospectus, or the like. The card 12a may be clipped or cut or otherwise separated from the attached printed product, and presented at a participating retail outlet or other business establishment in order to make the desired donation.

The card 12a may also be provided as a coupon such as an individual, serial, separate or detachable coupon. Alternatively, the card 12a may also be provided as an appendage, such as a sticker, attachable to some other product, article, packaging, or the like.

It is also contemplated that the card 12a may be reusable or disposable. For disposables, the card 12a may be manufactured from an inexpensive mass-produced product, such as a detachable coupon printed in a periodical. For reusables, the card 12a may be manufactured from a more sturdy material, such as plastic or heavy cardboard. A reusable plastic card could also serve as a membership card of an organization (e.g. major credit card), a customer card of a retail outlet (e.g. check-cashing card), or the like.

The donation card 12a illustrated in Figure 3a includes printed matter 46 and encoded data 48. The printed matter 46 may include art-work, drawings, caricatures, photos and other graphic depictions. The printed matter may further include word descriptions identifying the beneficiary, describing the beneficiary, describing the particular program soliciting charitable donations, describing instructions for using the donation card, and other information.

The encoded data 48 may also take a variety of forms. For example, the encoded data 48 may be mechanically encoded (e.g. punched holes), optically encoded (e.g. bar code) or magnetically encoded (e.g. magnetic strip). It is further contemplated that the encoded data may be provided as a microcircuit encoded on a microchip mounted on the identification means 12. Preferably, the encoded data 48 is bar code utilizing the International Article Number (EAN) standard or the Uniform Product Code (UPC) standard. The EAN standard is the uniform standard for item coding in the world, except for the United States and Canada. The International Article Numbering Association is an organization responsible for coordinating, developing and promoting article numbering worldwide. The UPC standard is the uniform standard for the United States and Canada. The Uniform Code Council is an organization responsible for administering article numbering standards in North America.

EAN is generally used in the manufacturing industry, wholesale trades and retail trades. Currently, there are two versions of EAN: EAN-13 CODE and EAN-8 CODE. The standard EAN-13 article number includes a prefix flag (two digits), manufacturer number (five digits), article/product reference digits (five digits) and a "check digit" (one digit). The prefix flag defines the country, and the manufacturer number identifies the manufacturer with four or five numbers. The article/product reference digits define the particular item or consumer unit, and each unit must be defined as a different number. The check digit is used to confirm that the code is correctly composed.

The standard EAN-8 article number is an eight-digit short version of the EAN-13 article number. EAN-8 includes a prefix flag (two digits), article/product reference digits (five digits) and a "check digit" (one digit). The encoded data 48 illustrated in Figure 3a is a is a truncated version of EAN-13 code.

The general form of the UPC code is slightly different from the EAN code, but otherwise the UPC code operates the same way as the EAN code. Currently, there are three standard versions of the UPC code used to identify individual products. UPC-A code is a standard 12 digit version (there is also a 13th digit but it is always zero and it is never visible). Figure 3c illustrates the UPC-A code. UPC-D code is a version that allows for encoding 14 to 32 characters to include additional specialized information. UPC-E code is a short version (zero compression) wherein six digits are directly presented in the bar code symbol. However, when the symbols are decoded, they are restructured into twelve digits.

The encoded data 48 may include a variety of information that could be useful in connection with organizing, accounting for and tracking the various types of information related to charitable donations. The encoded data 48 should at least identify the identification means 12 and the beneficiary. The encoded data may also include information specifying the targeted use of the donation. The encoded data 48 may also include information for tracking the history of an individual donation card 12a, or information indicating the method of distributing the particular card 12a, or some other type of historical record-keeping information. The encoded data 48 may also set a fixed level for the currency amount of the donation, or a variety of possible currency amounts for the donation. Finally, the encoded data 48 may open a line connection 24 to the beneficiary's bank account or to the donor's bank account for making a direct electronic transfer of funds using the computer system of a financial institution 26.

The first computer 16 illustrated in Figure 2 is equipped with data entry means appropriate for detecting the encoded data 48 found on the identification means 12. For mechanically encoded data such as punched holes, the data entry means 14 is a mechanical reader. For bar codes, the data entry means 14 is an optical reader, and for magnetic codes, the data entry means 14 is a magnetic reader. The data entry means 14 should also include a keyboard for manually entering data such as the article number of the encoded data 48, or the as the amount of the charitable donation.

The first computer 16 is preferably a conventional computer-based cash register of the type used in retail stores and other business establishments worldwide. Such registers typically include a code reader for automatically entering encoded data, a keyboard for manually entering data, a sliding door including trays for receiving currency, and a display for providing prompts to the operator and/or customer. Such a register further includes the conventional processor and memory hardware utilized by computers to execute instructions and store and manipulate data. In this situation, of course, the data entry is performed by a clerk or teller as part of their normal duties, which typically involve scanning bar coded merchandise into the computer-based cash register and accepting currency from customers for the merchandise.

An example of a suitable computer-based cash register is the "Beetle" family of POS computers (model numbers 2000/20 and 2000/40) available from Siemens Nixdorf Informationsystems, AG, in Munich Germany. A U.S affiliate of Siemens Nixdorf Informationsystems, AG, in Munich Germany, is Siemens Nixdorf Information Systems, Inc., Burlington Massachusetts. The Siemens 2000/20 and 2000/40 POS computers generally provide an IBM compatible AT-based system architecture; an Intel 80286, 12 MHZ microprocessor; two MB DRAM memory; 32 KB CMOS non-volatile memory; MS-DOS 5.0 operating system; connector for external memory card; 16-bit AT slot for an LAN or WAN adapter (for stand alone operation); VGA card; 20 MB hard disk; a cash drawer; POS keyboard with 60 keys (46 of which are programmable); central lock; a three-track swipe card reader (integrated with the keyboard); a twenty character alpha-numeric customer display; a hand held scanning bar code reader; and a stationary scanning bar code reader.

The second computer 22 illustrated in Figure 2 is generally known in the retail trade as a "server" computer 22. The server computer 22 includes mass-storage files for accumulating and organizing the daily events processed by the first computer 16. The server computer 22 may be connected to a plurality of first computers 16 to form a network. As used in connection with the disclosed system, the mass-storage files of the server computer 22 include a file marked for donations, and within this file there are several fields of information. Each field is dedicated to it own particular article number which also defines a particular code and a particular card. Each of these have a line in the file, and these lines collect information concerning the particular code/card.

The server computer 22 stores every event related to every code/card in its mass storage. For example, the server computer 22 can keep track of how many cards have been sold during a given time period , the time of day each card was sold, the additional purchases made by the donor, and the total donations for each card or for all cards together. Also, if the identification means 12 is encoded with the large capacity UPC-D code, the encoded data 48 may include additional information that may also be tracked and organized by the server computer's (22) mass-storage. Such additional data could include the method by which the identification means 12 was distributed (direct mail, newspaper advertisement, etc.). If each identification means 12 is provided with a unique code and sent to particular donors by direct mail, the encoded information may identify the name and address of the donor.

If the first computer 16 is in a stand-alone configuration, the sever computer 22 may be omitted, and thus, the first computer 16 would be provided with its own on-board mass storage capabilities. It is also contemplated that several associated retail units could be served via an on-line connection to a central server computer.

The donations collected by the system 10 of the present invention may be transferred from the retail collecting entity to the beneficiary fund-raising entity in several ways. For example, as described above, the computer-based cash register terminal (16) transfers payment data to the mass-storage of the server computer 22, which is generally located in the accounting department of the retail entity. The funds are then paid to the beneficiary at a frequency agreed upon in advance, using conventional currency transfer procedures such as checks or direct electronic deposits via a line connection 24 to the computer system of a chosen financial institution 26. Alternatively, if the first computer 16 is in a stand alone configuration having it own mass-storage, the first computer may be in direct on-line contact 24 with the computer system of a chosen financial institution 26. In this manner, the donations may be transferred to the account of the beneficiary directly from the account of the retail entity or from the account of the donor on a real time basis.

The system 10 of the present invention may be implemented using commercially available software programs currently finding widespread use in retail businesses around the world. One example of a suitable software program is the "Calypso" retail software program available from Siemens Nixdorf Informationsystems, AG, in Munich Germany. The Calypso program is designed for use on a variety of platform from stand-alone configurations to multi-server configurations networked with host systems. Calypso is capable of running on the Siemens 2000/20 (DOS) and 2000/40 (UNIX) systems, and may be programmed simply and efficiently using the "C" programming language.

One of the key advantages of the system 10 embodying the present invention is the ability to easily integrate the system 10 into the electronic inventorying, purchasing and accounting systems of existing retail businesses. Programs and hardware such as Calypso and the Siemens Beetle family of POS terminals, are quickly adapted to incorporate the fund-raising system 10. First, a specific program file (donations file) is created for collecting fields of information on the donations collected. Second, the particular EAN or UPC codes are added to the newly created donations file.

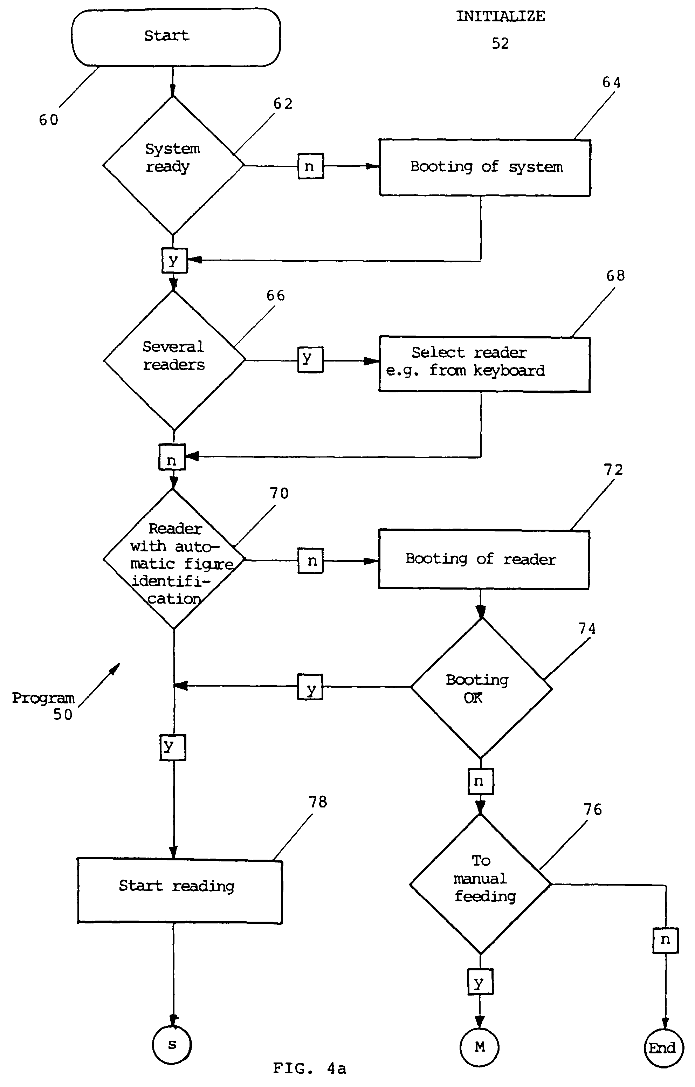

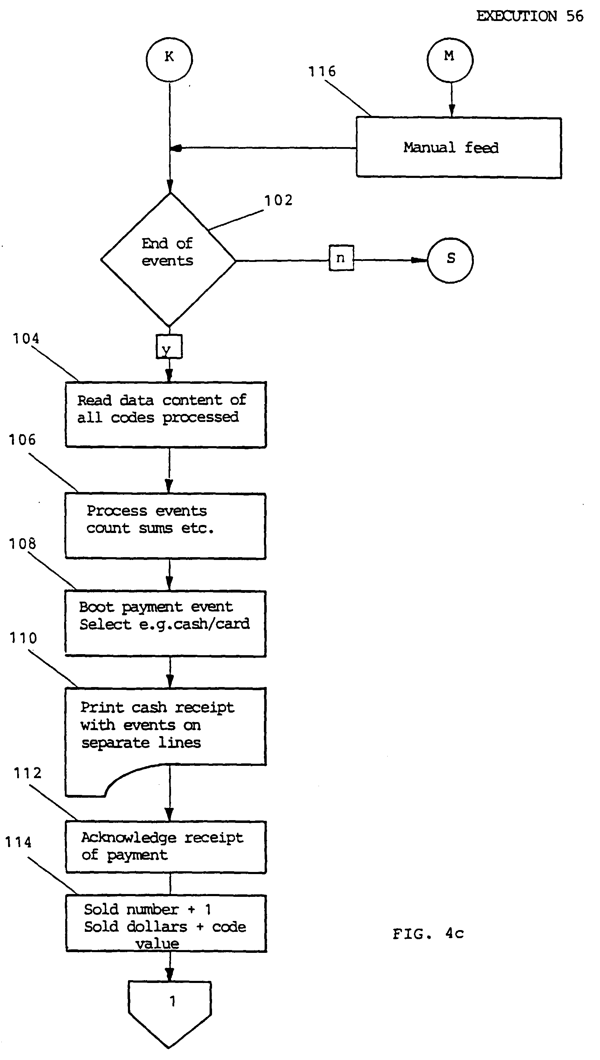

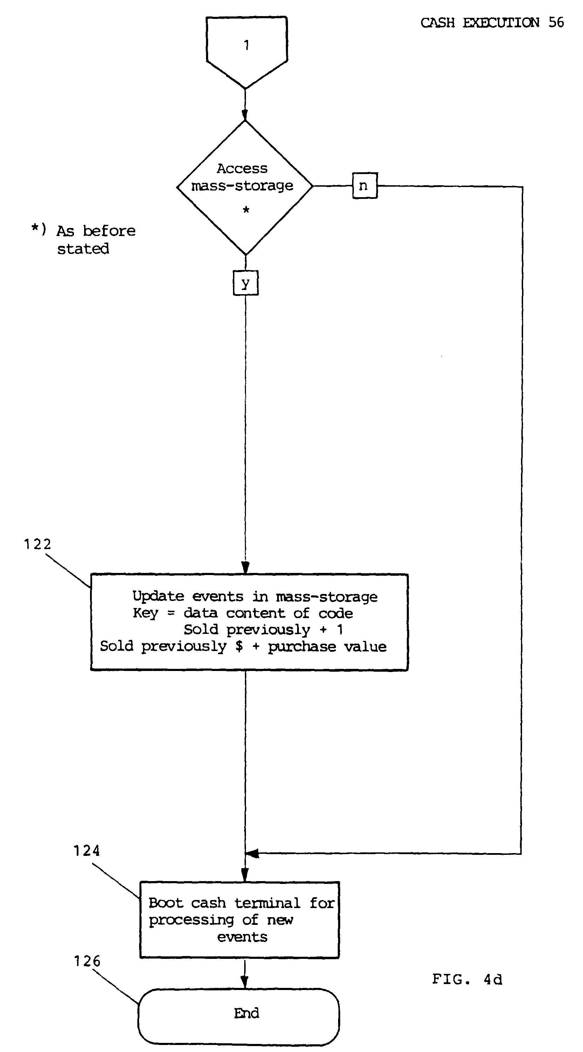

Figures 4a to 4e is a flow diagram 50 illustrating the general operation of the computer hardware and software used to implement the system shown in Figure 1. The diagram 50 utilizes a conventional POS terminal having a code reader access to sufficient mass-storage capabilities, either its own or through a server computer terminal. The first section of the diagram 50 is the Initialize Section 52 shown in Figure 4a. The Initialize section 52 starts at block 60 and then asks in block 62 whether the software is ready. If the answer to the inquiry in block 62 is no, the program is booted in block 64 and the Initialize Section 52 then returns to block 66. If the answer to the inquiry in block 62 is yes, the Initialize Section 52 proceeds directly to block 66 which asks whether there are several code readers. If the answer to the inquiry in block 66 is yes, the Initialize Section 52 selects the desired code reader in block 68 and returns to block 70. If the answer to the inquiry in block 66 is no, the Initialize Section 52 moves directly to block 70.

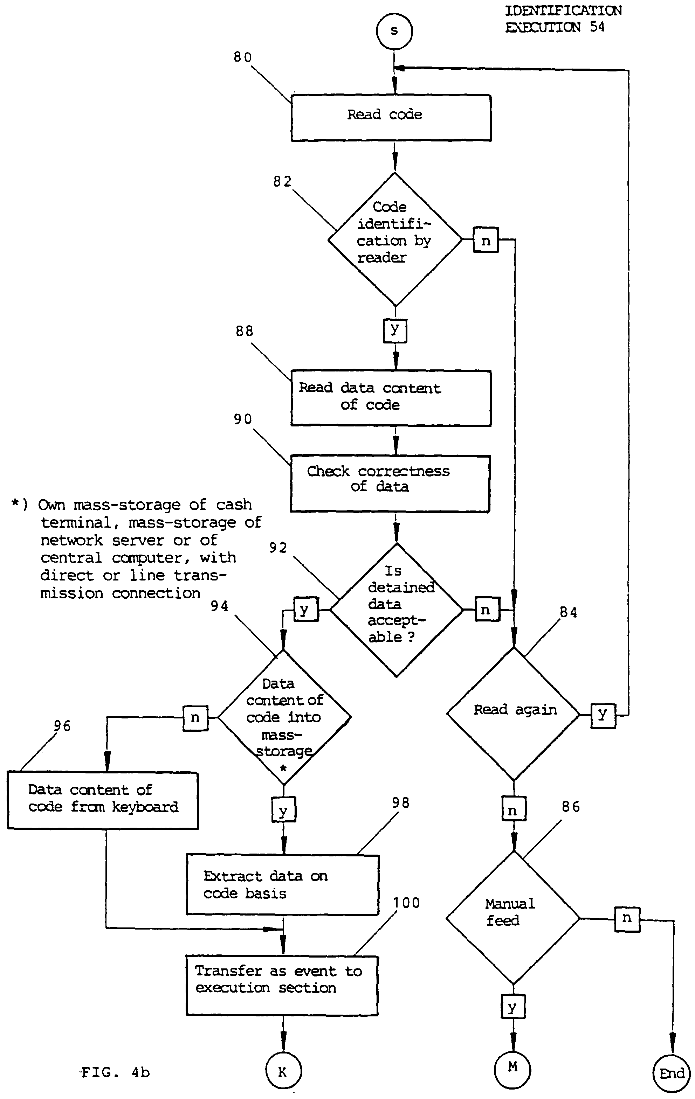

In block 70 the Initialize Section 52 asks whether the chosen code reader is provided with automatic figure identification. If the answer to the inquiry in block 70 is no, the Initialize Section 52 boots the reader in block 72, and then determines whether the boot was successful in block 74. If the answer to the inquiry in block 74 is no, the Initialize Section 52 moves to block 76 and determines whether or not it will move to manual feeding. If the answer to the inquiry in block 74 is yes, the Initialize Section 52 returns to block 78 and starts reading the code. From block 78 the program moves to the Identification Section 54 shown in Figure 4b.

The Identification Section 54 begins by reading the code at block 80. The Identification Section 54 then attempts to identify the code in block 82. If the code is not properly identified in block 82, the Identification Section 54 moves to block 84 which asks the user whether or not the code should be read again. If the answer to the inquiry in block 84 is yes, the Identification Section 54 returns to its beginning in block 80. If the answer to the inquiry in block 84 is no, the Identification Section 54 moves to block 86 which again determines whether to move to a manual feed.

If the code is successfully identified in block 82, the Identification Section 54 moves to block 88 which reads the data content of the code. The correctness of the coded data is checked in block 90. From block 90, the Identification Section 54 moves to the inquiry in block 92 which determines whether the obtained data is acceptable. In other words, the software searches the computer's memory to determine whether the article identified in the code is found in the computer's memory. The software looks for the existence of the article code represented in encoded data. If the code is "011111222229," (UPC-A), the digit 0 identifies the article everywhere in the world as a North American product. The digits 11111 identify that the article is a product of, for example, "Fund-Raising America, Inc.." The digits 22 identify the beneficiary as, for example, the American Cancer Society. The digits 222 identify the article as being associated with a certain campaign calling for a minimum donation of donation of $10.00. The digit 9 is the check digit calculated from the previous digits. Consequently, if the answer to the inquiry in block 92 is no, the Identification Section 54 moves to block 84, and the operator scans the product again. If the answer to the inquiry at block 92 is yes, the code can be found in memory, and the Identification Section 54 moves to the inquiry in block 94.

In block 94, the Identification Section 54 determines whether or not the software can transfer the encoded data into the mass-storage. Mass-storage may be in the POS terminal itself, a network server, or a central computer with a direct on-line transmission connection. If the software cannot transfer the encoded data into mass-storage (because of a software malfunction or other technical problem), block 96 allows the operator to enter the encoded data into mass-storage manually from the keyboard. Otherwise, the Identification Section 54 proceeds to block 98 to perform a PLU operation. The purpose of block 98 is to find in mass-storage any pre-stored additional information, such as the price associated with the article, by using newly stored data content of the code as a basis or as a key to access this additional information.

For example, in the case where a particular article can only be used to donate one predetermined amount of money to a particular beneficiary, block 98 is where the software looks for the pre-stored information. This information is stored in the mass-storage and, using the data content of the code as a key, the software extracts this fixed amount and any other additional information that may be used in later steps of the program. For example, if the code in question is "011111222229," (UPC-A), when this code is entered into the system and stored into mass storage, the code informs the software that the donation value is fixed at $10.00, and transfers this fixed donation amount to the computer-based cash terminal. The software also extracts the additional instructions that, when this particular code is entered, the cash register should show on its display monitor the text "Donation American Cancer Society $10.00" and later print this line of text on the donor's receipt.

The Execution Section 56 begins in block 102. The operator initiates the "End of Events" sequence in block 102 by making the appropriate keyboard entry when all of the purchases made by the customer, including all donations and other purchases, have been entered and properly processed by the POS terminal. The Execution Section 56 then reads the data content of the code in block 104 and processes all of the events in block 106. Such events may include "Count Sums" which is the total of the purchases made by the donor, or "Check Customer Rewarding System" which could be included if for example the retail outlet has a system whereby every 1000th donor receives a gift.

At block 108, the Execution Section 56 boots the payment event, and the operator selects the method of payment as cash or credit card. The Execution Section 56 then moves to block 110 which prints a verification of the events which have occurred with each event being printed on a separate line. The operator acknowledges receipt of the payment in block 112, and the mass-storage files are accessed in block 118. The Execution Section 56 then increments certain sales accounting variables in block 114. For the disclosed embodiment, these variables may include the number of donations sold or the dollar amount of donations sold.

The Execution Section 56 moves to block 122 and updates the events in mass-storage by using the code data as the key for entering the necessary files in mass-storage. The files updated in block 122 may include a file that tracks the sales of one particular cash register terminal, a file that tracks the sales figures of one particular operator, and other files. The operation defined in block 122 may be repeated several time depending upon the number of donations and/or other purchases made by the individual customer. The cash register terminal is booted again in block 124 on order to process new events, and the Execution Section 56 ends in block 126.

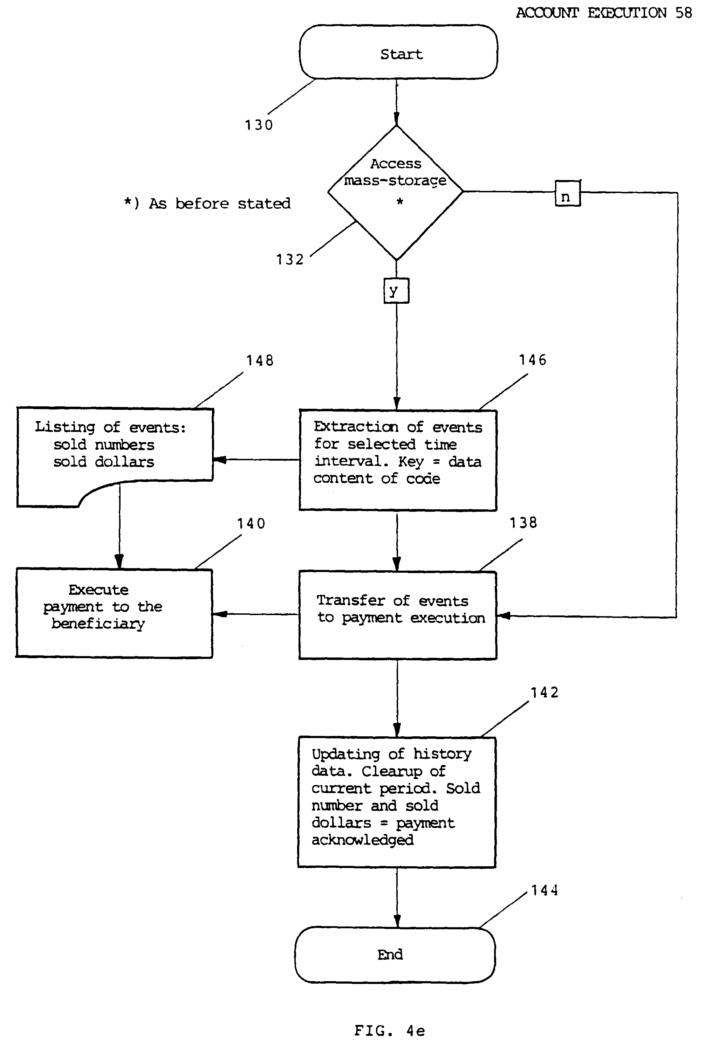

Figure 4e illustrates the general features of the Account Execution Section 58. The Account Execution Section 58 is executed by the server computer (22) using its mass-storage information. Daily events by all of the different cash register terminals in a given network are all stored in the files of the server's mass storage. This information is used for in-store follow-ups and for accounting.

The Account Section 58 performs two general functions. First, it processes the donation events for a given beneficiary during a chosen period of time. Second, it processes all other follow-up information for the retail outlet, or for the beneficiary receiving the donations.

The Account Section 58 accesses the mass-storage files in block 132. In block 146, the necessary information is extracted using the coded data as a key for entering the needed mass-storage files. In block 148, the follow-up information is listed and may be printed or otherwise transferred to particular entities desiring the information. Block 138 transfers the payment related information extracted in block 146 to block 140. In block 140, the collected donations are paid to the charitable entities designated by the encoded data. Payment may be executed by transferring the amount electronically as a line transfer from the account of the retail outlet to the account of the beneficiary. Alternatively the payment may be printed on a check by a printer assigned to the server computer 22.

In block 142, the information of the "current period file" may be used to update another file for collecting "history data", and the "current period" file is cleared up while payment is acknowledged.

In the situation where the computer-based cash register is an ECR terminal with no mass storage, the accounting information is gathered by generating daily control strips from each ECR terminal. The control strips may be generated by providing a key on the keyboard dedicated to "donations." The operator must press the donations key every time a donation is processed. This automatically places the total sum of the all entered donations on the control strip under donations. Because this is a lump sum, an ECR terminal cannot receive donations for more than one beneficiary at a time. The control strips must be collected periodically and taken to the accounting department for payment to the beneficiary.

### CUMULATIVE (ACCUMULATIVE?) FILE "DONATIONS"

File is created separately. New codes are added to it either through the use of a scanner or manually using conventional adding(?) routines (methods?). File is updated with cumulative and periodic information on a real-time-basis (e.g. numbers (of cards processed), currency amounts (collected), and other information extracted from the contents of the codes processed). The size of the file is determined (defined?) by the quantity of the codes stored in the file, not separate donation events registered. Desired querys are easy to make, since the file is composed of summed up records of information (records of information already summed up?). Thus the file operates user-friendly.

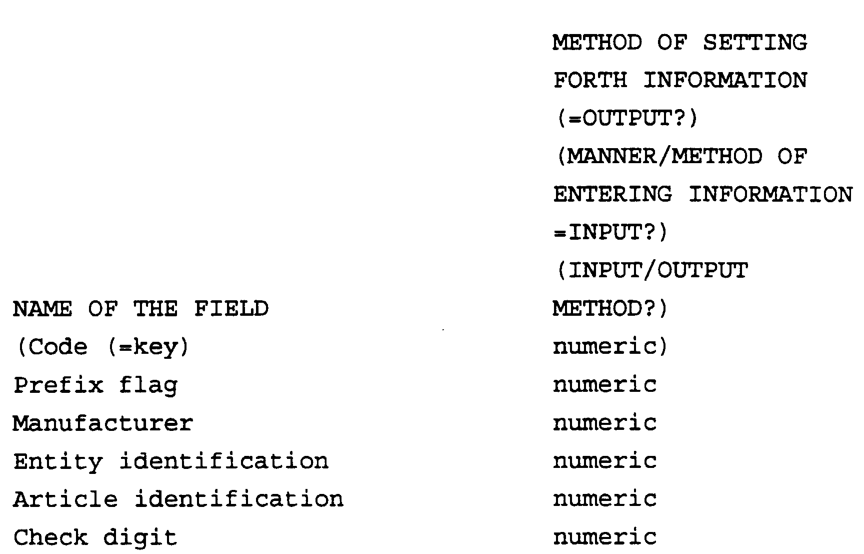

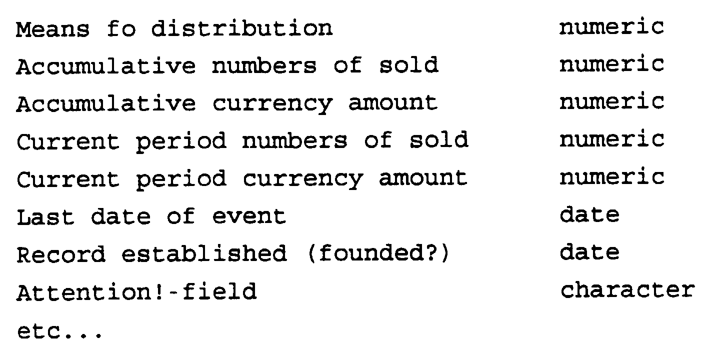

Initially and prior to any processing or purchasing events the item code of a donation card is recorded/stored into the file as a key. This can be done either by scanning the code into the file with a light pen (in some cases a stationary scanner) connected to the server computer, or recording it manually from the keyboard. When once recorded, the code then acts as a key opening the record and fields of that record to enter of events linked to this particular donation card.

Addition to the file is executed in the program as follows:
- Can file "Donations" be found? Block 120, if Yes)
- Open file
- Deblock contents of the basic code
- Update equivalent records
- Does the contents of the code include add on encodation?
- If Yes, deblock and update eqvivalent records
- If No, move on
- If new events, return to establish a new deblock record routine
- If no new events, close file

### SEQUENCE FILE

The size of the file grows on grounds of events entered into it. An event is added to the file as a new record each time an equivalent donation card is processed by the cash register terminals. Each new event is a new "card" in the file: the pack increases in "height" each time a new event occures. There is no need to create a separate file. One record of a file is one event. Accurate information can be extracted from the file, classified in e.g. terminal by terminal, operator by operator or time of the day.

| NAME OF THE... | METHOD OF... |
|---|---|
| (Code (=key) | numeric) |
| Code storing | numeric |
| Consecutive digit identification | numeric (=tracking donors) |
| Outlet identification | numeric |
| Cash register terminal identification | numeric |
| Time | numeric |
| Date | date |
| Operator identification | numeric |
| Pre-stored currency amount | numeric |
| Currency amount received | numeric |
| Add to the total sales of the outlet? | boolean (Yes/No; donations=No) |
| Method of payment and so on and so forth... | numeric |

Recording/storing the item code of a donation card as a key can be executed as before stated.

When new record is created, the data content of the item code is connected to a series of fields extracted automatically from the "general guidance program" of the cash register terminal. That is to say that the terminal automatically connects the outlet identification field, cash terminal identification field, time field etc. to the item code currently processed.

The consecutive digit identification field means that if individual cards (=donors) have individual consecutive identification digit fields, this is when these are stored into the mass storage for later use.

Each operator identifies himself to the terminal by using a key entry or some other method of identification before starting his "shift". When this identification has been completed, the terminal henceforth transmits this field of information automatically as a field of each record created.

Currency amount collected is recorded thereafter either by connecting the code to the PLU-sequence of the mass-storage (the donation value is then transferred automatically as a field in the record), or by the operator entering this amount into the mass-storage from keyboard. Add to the total sales of the outlet field means that the currency amount of a donation is automatically excluded from the total sales figures of the outlet. It is a financial transaction, not an event of selling something.

Method of payment field is transmitted automatically after the operator has made an appropriate key entry indicating this information.

Addition to the file is executed in the program as follows:
- Establish new record (item code + outlet identification field + cash terminal identification field etc. Note that it does not mean adding up here: it means integrating one field with another)
- Open file
   Add event record as the latest record on file
- If new events, return to establish a new create record routine
- If no new events, close file

The formated file can be used in a variety of ways.
- Summaries, sortings, transfers, extractions, deletions, etc. can be executed
- Records can be transferred for to be used in another programs (Analyzing programs, spread sheet programs, data base programs etc.)
- Records can be transferred to the data base of a large main frame computer
Note that as a rule something specific has to be done with a record prior to any specialized executions (e.g. if the record is to be used in a spread sheet program, the program might require that the record is first deblocked and the deblocked fields sorted and reorganized
- together with other records which are to be used in the program execution - before actually processed in the program. This deblocking and the like is usually done by the specialized program itself as a preliminary measure.) What this "something specific" is, depends totally on the requirements that the program in question states for the data material it can process.

(These two types of files can, if so desired together constitute a directory called "Donations". This would, however, lead to a need of restructuring the flowcharts, and would propably mean nothing more than just one additional unnecessary step in the program.)

The files described here can also run simultaneously (well, actually one after the other) guiding the cash register. The cumulative file collects specific fields of information linked exclusively to the fund raising system and its identification means. The sequence file collects fields of information which are common to and collectively collected on all different products and events processed by the cash register terminals of the outlet in question. With the exception of the donor trackning consecutive digit identification-field, which is best placed here, since it must be operated as a sequence file.

The sequence file can, of course, be one created specially for donation purposes. It can also be the common file for all data information collected on all events processed by the cash register terminals using the item code as a key, and regardless of what "article class" the purchase falls into.

The most feasable solution would propably be to use the cumulative version as the "Donations" file collecting exclusive donations information, and to use a common sequence file to collect the bits of information common to all items processed by the cash register terminal. Information on these two files could then, if needed, be combined and processed by using specialized programs, such as for example a spread sheet program. The present Figure 4e illustrates this alternative. It executes updating a separate "Donations" file first, and then moves on to update the common file.

(If Figure 4e does not find a separate "Donations" file, it proceeds to block 140 to update the common file/-files in the masstorage with all of the information extracted from the contents of the code of the donation card in question.)

Thus, it can be seen from the above description of the invention, taken in conjunction with the accompanying drawings, that the present invention achieves several advantages. For example, the above-described identification means can be easily integrated into the regular product-line of any retail establishment that uses computer-based cash-registers/terminals to identify products and collect funds for purchases. Thus, fund-raising activities may be easily integrated with the normal cash-collecting and accounting systems utilized in retail trades. By making use of the disclosed system, fund-raising entities can organize their fund-raising activities through large retail outlets, thus receiving exposure to a large pool of potential donors on a regular basis. The need for providing labor dedicated to collecting funds is reduced and in some cases may be eliminated.

While the above-described embodiments of the invention are preferred, those skilled in this art will recognize modifications of structure, arrangement, composition and the like which do not part from the true scope of the invention. The invention is defined by the appended claims, and all devices and/or methods that come within the meaning of the claims are intended to be embraced therein.

## Claims

1. A method of collecting donations, the steps comprising:
providing a donor with encoded data (48) identifying at least one entity;
providing a computer (16) having data entry means (14), said computer (16) being programmed to perform the following functions:
accept at said data entry means (14) said encoded data (48) identifying said at least one entity;
accept at said data entry means (14) a currency amount of a charitable donation from said donor to said at least one entity; and
associate said currency amount with said encoded data (48) identifying said at least one entity.

2. The method defined in claim 1 wherein said encoded data (48) further identifies at least one currency amount of a donation from said donor to said at least one entity.

3. The method defined in claim 1 wherein said data entry means (14) comprises a code reader and a keyboard.

4. The method defined in claim 1 wherein said data entry means (14) comprises a code reader capable of interpreting said encoded data (48) by one of optical, mechanical or magnetic means.

5. The method defined in claim 1 further comprising the step of entering into said data entry means (14) said encoded data (48) identifying said at least one entity.

6. The method defined in claim 5 further comprising the step of entering into said data entry means (48) a currency amount of a donation from said donor to said at least one entity.

7. The method defined in claim 6 further comprising the step of collecting said currency amount from said donor.

8. The method defined in claim 7 further comprising the step of transferring said currency amount to said at least one entity.

9. The method defined in claim 8 wherein:
said computer (16) has means (18,20,22) for initiating electronic currency transactions at a financial institution (26) via an on-line connection (24) to an electronic transaction system of said financial institution (26); and
said currency amount is transferred to said at least one entity via said electronic transaction system.

10. The method defined in claim 1 wherein said encoded data identifying said at least one entity is encoded on a card (12a).

11. The method defined in claim 1 wherein said encoded data (48) is carried on a card (12a) and/or comprises one of a list including punch codes, bar codes, a magnetically encoded strip or a microcircuit chip.

12. The method defined in claim 1 wherein said encoded data (48) comprises bar codes and said bar codes comprise either EAN code or UPC code.

13. The method defined in claim 1 wherein said computer (16) comprises a computer-based cash register.

14. The method defined in claim 13 wherein said computer based cash register stores said encoded data (48) into a mass-storage means (22).

15. The method defined in claim 1 further comprising the step of distributing an article having said encoded data (48) to potential donors.

16. The method defined in claim 15 wherein said encoded data (48) further identifies to said computer (16) a means by which said article was distributed.

17. A donation collecting means, comprising a printed card (12a) of plastic material, paper board, carton or similar printable sheet material, said card (12a) being provided with printed information (46) concerning at least the purpose of the donation and the entity receiving the donation; and said card (12a) being further provided with coded information (48), for example in the form of a bar code, automatically readable and processable by code-detecting means and a computer-based cash register of the type used in retail stores and similar business establishments.

## Patentansprüche

1. Verfahren zum Sammeln von Spenden, das die folgenden Schritte umfaßt:
Ausstatten eines Spenders mit codierten Daten (48), die wenigstens eine juristische Person bezeichnen;
Bereitstellen eines Computers (16) mit einer Dateneingabeeinrichtung (14), wobei der Computer (16) so programmiert ist, daß er die folgenden Funktionen ausführt:
Annehmen der codierten Daten (48), die die wenigstens eine juristische Person bezeichnen, an der Dateneingabeeinrichtung (14);
Annehmen eines Geldbetrages einer caritativen Spende von dem Spender für die wenigstens eine juristische Person an der Dateneingabeeinrichtung (14); und
Zuordnen des Geldbetrages zu den codierten Daten (48), die die wenigstens eine juristische Person bezeichnen.

2. Verfahren nach Anspruch 1, wobei die codierten Daten (48) weiterhin wenigstens einen Geldbetrag einer Spende des Spenders für die wenigstens eine juristische Person bezeichnen.

3. Verfahren nach Anspruch 1, wobei die Dateneingabeeinrichtung (14) einen Codeleser und eine Tastatur umfaßt.

4. Verfahren nach Anspruch 1, wobei die Dateneingabeeinrichtung (14) einen Codeleser umfaßt, der die codierten Daten (48) mit optischen, mechanischen oder magnetischen Mitteln lesen kann.

5. Verfahren nach Anspruch 1, das des weiteren den Schritt des Eingebens der codierten Daten (48), die die wenigstens eine juristische Person bezeichnen, in die Dateneingabeeinrichtung (14) umfaßt.

6. Verfahren nach Anspruch 5, das des weiteren den Schritt des Eingebens eines Geldbetrages einer Spende von dem Spender für die wenigstens eine juristische Person in die Dateneingabeeinrichtung (48) umfaßt.

7. Verfahren nach Anspruch 6, das des weiteren den Schritt des Einziehens des Geldbetrages von dem Spender umfaßt.

8. Verfahren nach Anspruch 7, das des weiteren den Schritt des Überweisens des Geldbetrages an die wenigstens eine juristische Person umfaßt.

9. Verfahren nach Anspruch 8, wobei:
der Computer (16) über Einrichtungen (18, 20, 22) verfügt, die elektronische Geldtransaktionen in einem Finanzinstitut (26) über eine On-line-Verbindung (24) mit einem elektronischen Transaktionssystem des Finanzinstituts (26) einleiten; und
der Geldbetrag über das elektronische Transaktionssystem an die wenigstens eine juristische Person überwiesen wird.

10. Verfahren nach Anspruch 1, wobei die codierten Daten, die die wenigstens eine juristische Person bezeichnen, auf einer Karte (12a) codiert sind.

11. Verfahren nach Anspruch 1, wobei die codierten Daten (48) von einer Karte (12a) getragen werden und/oder eine einer Gruppe von Einrichtungen umfassen, zu denen Lochcodes, Strichcodes, ein magnetisch codierter Streifen oder ein Mikrochip gehören.

12. Verfahren nach Anspruch 1, wobei die codierten Daten (48) Strichcodes umfassen und die Strichcodes entweder einen EAN-Code oder einen UPC-Code umfassen.

13. Verfahren nach Anspruch 1, wobei der Computer (16) eine Computer-Registrierkasse umfaßt.

14. Verfahren nach Anspruch 13, wobei die Computer-Registrierkasse die codierten Daten (48) in einer Massenspeichereinrichtung (22) speichert.

15. Verfahren nach Anspruch 1, das des weiteren den Schritt des Verteilens eines Gegenstandes mit den codierten Daten (48) an potentielle Spender umfaßt.

16. Verfahren nach Anspruch 15, wobei die codierten Daten (48) dem Computer (16) des weiteren eine Einrichtung angeben, mit der der Gegenstand verteilt wurde.

17. Spendensammeleinrichtung, die eine bedruckte Karte (12a) aus Kunststoffmaterial, Pappe, Karton oder einem ähnlichen bedruckbaren Bogenmaterial umfaßt, wobei die Karte (12a) mit aufgedruckten Informationen (46) versehen ist, die wenigstens den Zweck der Spende und die juristische Person, die die Spende empfängt, betreffen, wobei die Karte (12a) weiterhin mit codierten Informationen (48), beispielsweise in Form eines Strichcodes, versehen ist, der von einer Codeerfassungseinrichtung und einer Computer-Registrierkasse des Typs, der in Einzelhandelsgeschäften und ähnlichen Handelseinrichtungen eingesetzt wird, automatisch gelesen und verarbeitet werden kann.

## Revendications

1. Procédé pour collecter des dons, les étapes consistant à :
affecter à un donateur des données codées (48) identifiant au moins une entité;
prévoir un ordinateur (16) comportant des moyens (14) d'entrée de données, ledit ordinateur (16) étant programmé de manière à exécuter les fonctions suivantes :
accepter, dans lesdits moyens (14) d'entrée de données, lesdites données codées (48) identifiant ladite au moins une entité;
accepter dans lesdits moyens (14) d'entrée de données, une quantité d'argent d'un don charitable envoyé par ledit donateur à ladite au moins une entité; et
associer à ladite quantité d'argent lesdites données codées (48) identifiant ladite au moins une entité.

2. Procédé selon la revendication 1, dans lequel lesdites données codées (48) identifient en outre au moins une quantité d'argent d'un don envoyé par ledit donateur à ladite au moins une entité.

3. Procédé selon la revendication 1, dans lequel lesdits moyens (14) d'entrée de données comprennent un lecteur de code et un clavier.

4. Procédé selon la revendication 1, dans lequel lesdits moyens (14) d'entrée de données comprennent un lecteur de code apte à interpréter lesdites données codées (48) par l'un de moyens optique, mécanique ou magnétique.

5. Procédé selon la revendication 1, comprenant en outre l'étape consistant à introduire, dans lesdits moyens (14) d'entrée de données, lesdites données codées (48) identifiant ladite au moins une entité.

6. Procédé selon la revendication 5, comprenant en outre l'étape consistant à introduire dans lesdits moyens (48) d'entrée de données, une quantité d'argent d'un don envoyé par ledit donateur à ladite au moins une entité.

7. Procédé selon la revendication 6, comprenant en outre l'étape consistant à collecter ladite quantité d'argent provenant dudit donateur.

8. Procédé selon la revendication 7, comprenant en outre l'étape consistant à transférer ladite quantité d'argent à ladite au moins une unité.

9. Procédé selon la revendication 8, dans lequel
ledit ordinateur (16) comporte des moyens (18,20,22) pour déclencher des transactions électroniques d'argent dans un organisme financier (26) par l'intermédiaire d'une connexion en ligne (24) avec un système de transaction électronique dudit organisme financier (26); et
ladite quantité d'argent est transférée à ladite au moins une entité par l'intermédiaire dudit système de transaction électronique.

10. Procédé selon la revendication 1, dans lequel lesdites données codées identifiant ladite au moins une entité sont codées sur une carte (12a).

11. Procédé selon la revendication 1, dans lequel lesdites données codées (48) sont portées par une carte (12a) et/ou comprennent des codes à perforations, des codes à barres, une bande codée magnétiquement ou une plaquette à microcircuits.

12. Procédé selon la revendication 1, dans lequel lesdites données codées (48) comprennent des codes à barres et lesdits codes à barres comprennent soit un code EAN, soit un code UPC.

13. Procédé selon la revendication 1, dans lequel ledit ordinateur (16) comprend une caisse enregistreuse basée sur un ordinateur.

14. Procédé selon la revendication 13, dans lequel ladite caisse enregistreuse basée sur un ordinateur mémorise lesdites données codées (48) dans des moyens de mémoire de masse (22).

15. Procédé selon la revendication 1, comprenant en outre l'étape consistant à distribuer un article possédant lesdites données codées (48) à des donateurs potentiels.

16. Procédé selon la revendication 15, dans lequel lesdites données codées (48) identifient en outre pour ledit ordinateur (16) des moyens à l'aide desquels ledit article a été distribué.

17. Moyens de collecte de dons comprenant une carte imprimée (12a) en matière plastique, en papier cartonné, en carton ou en matériau en forme de feuille imprimable similaire, ladite carte (12a) étant pourvue d'une information imprimée (46) concernant au moins le but du don et l'entité recevant le don; et ladite carte (12a) étant en outre pourvue d'une information codée (48), par exemple sous la forme d'un code à barres, pouvant être lu et traité automatiquement par des moyens de détection de code et une caisse enregistreuse basée sur un ordinateur, du type utilisé dans des magasins de vente au détail et des établissements commerciaux similaires.
